# EUROPÄISCHE PATENTANMELDUNG

(11) **EP 4 289 319 A1**
(43) Veröffentlichungstag der Anmeldung: **13.12.2023**
(21) Anmeldenummer: 23171674.7
(22) Anmeldetag: 04.05.2023
(51) Int. Cl.: A47J 37/07

(54) **LEBENSMITTELGARGERÄT**

(30) Priorität: 10.06.2022 DE 202022103273 U
(71) Anmelder: Enders Colsman AG, 58791 Werdohl (DE)
(72) Erfinder: CALA, Nils, 58791 Werdohl (DE)
(74) Vertreter: Haverkamp Patentanwälte PartG mbB

(57) **Zusammenfassung**

Die Erfindung betrifft ein gasbetriebenes Lebensmittelgargerät 1 umfassend einen Brennraum 8, sowie eine den Brennraum 8 zumindest abschnittsweise nach oben abschließende, im Betrieb zu garende Lebensmittel aufnehmende Lebensmittelaufnahme 2, 2.1, 2.2, 2.3, 7, 7.1, 7.2, 7.3, 7.4, wobei in dem Brennraum 8 ein gasbetriebener Stabbrenner 11 neben einem gasbetriebenen Kochstellenbrenner 6 dergestalt zueinander angeordnet ist, dass bei einem gleichzeitigen Betrieb der beiden Brenner 11, 6 zumindest ein Brenner 11, 6 den anderen Brenner 11, 6 bezüglich seiner Wärmeabgabe durch die selbst von ihm abgegebene Wärme beeinflusst.

## Beschreibung

Die Erfindung betrifft ein Lebensmittelgargerät, insbesondere ein gasbetriebenes Lebensmittelgargerät.

Lebensmittelgargeräte dienen dem Garen von Lebensmitteln, indem sie Lebensmittel erwärmen. Zum Erwärmen der Lebensmittel verfügen Lebensmittelgargeräte über eine Wärmequelle und werden typischerweise mit festen, flüssigen oder gasförmigen Brennstoffen, wie Holz, Kohle oder Brenngas betrieben. Auch sind Lebensmittelgargeräte mit einer elektrischen Wärmequelle bekannt. Typische Lebensmittelgargeräte sind etwa Grillgeräte und Kocher.

Die Wärmequellen sind bei einem Lebensmittelgargerät in einem Brennraum angeordnet. Der Brennraum ist oberseitig durch eine Lebensmittelaufnahme, etwa einem Grillrost, einer Grillplatte oder einer Kochgeschirraufnahme abgeschlossen. Auf der Lebensmittelaufnahme werden die zu garenden Lebensmittel zum Erwärmen platziert. Auch können Kochgeschirre, wie Töpfe, Pfannen oder Woks auf der Lebensmittelaufnahme platziert werden. Die Wärmequelle erwärmt dann das über ihr angeordnete Gefäß, in welchem sich die zu garenden Lebensmittel befinden. Die Lebensmittelaufnahme ist entsprechend ihres Einsatzzweckes angepasst.

Im Stand der Technik sind verschiedene Wärmequellen bekannt. Eine typische Wärmequelle ist eine gasbetriebene Wärmequelle, die als Brenner ausgebildet ist. Als brennbares Gas wird typischerweise Propan- oder Butangas verwendet.

Als eine Brennerart sind Stabbrenner bekannt. Ein Stabbrenner wird durch ein Rohr gebildet, welches über eine Aneinanderreihung von unmittelbar nebeneinander angeordneten, kleinsten Löchern, typischerweise seiner Längserstreckung folgend, verfügt. Das Gas wird in das Innere des Rohrs eingeleitet und tritt aus den Löchern aus. Sobald der in der Umgebung des Rohrs befindliche Sauerstoff und eine Zündflamme vorhanden sind, entzündet sich das Gas im Betrieb und bildet selbst eine Flamme. Die Geometrie des Stabbrenners ist vor diesem Hintergrund in seiner Längsrichtung gestreckt, gleiches gilt für das Flammenbild und damit die Wärmeproduktion dieser Wärmequelle.

Als eine weitere Brennerart sind Kochstellenbrenner bekannt. Kochstellenbrenner zeichnen sich durch eine runde, typischerweise kreisrunde Form aus. Gebildet wird ein Kochstellenbrenner typischerweise durch eine Brennerkavität sowie einem dazugehörigen, komplementären Brennerdeckel. Der Brennerdeckel ist auf der Brennerkavität aufgesetzt. Zur Bereitstellung von Gaskanälen weist die Brennerkavität entsprechende halbschalige Kanäle auf, welche oberseitig durch den dazugehörigen Brennerdeckel verschlossen werden; auch die Umkehrung ist bekannt (Brennerdeckel weist halbschalige Kanäle auf). In das Zentrum des Kochstellenbrenners wird Brenngas eingeleitet und radial nach außen durch die bereitgestellten Gaskanäle geführt.

An dem Auslass des Gasleitkanals entzündet sich das Gas durch den in der Umgebung befindlichen Sauerstoff und einer Zündflamme, bildet selbst eine Flamme und stellt so die gewünschte Wärme bereit. Ein Kochstellenbrenner eignet sich insbesondere zum Erwärmen von Kochgeschirr, etwa Töpfen, Pfannen oder Woks aufgrund des relativ kleinen Durchmessers bei gleichzeitig hoher Leistung; die Leistungsdichte bezogen auf die zu erwärmende Fläche ist höher als bei einem Stabbrenner. Die entstehenden Flammen treffen durch die Geometrie auf der Unterseite des zu erwärmenden Gefäßes auf; ein Auftreffen der Flammen auf die Kante des Kochgeschirrs im Übergang zu einem senkrechten Abschnitt soll vermieden werden, um eine unerwünschte Rußablagerung an dieser Kante zu vermeiden.

Bekannt ist grundsätzlich, einen Kochstellenbrenner und einen Stabbrenner an einem Lebensmittelgargerät anzuordnen. Offenbart ist dies beispielweise in Form eines Seitenkochers bzgl. des Kochstellenbrenners in US 7 163 011 B2 oder als Campingkocher in WO 2006 047 219 A1.

Nachteilig bei dem Stand der Technik ist, dass eine gewünschte Flexibilität nicht gegeben ist: auf dem Seitenkocher können lediglich Gefäße erwärmt werden; auf dem Grillbereich lediglich gegrillt. Sollen beide Funktionen zur Verfügung stehen, erhöht dies insgesamt den benötigten Platzbedarf. Insbesondere in beengten Verhältnissen, etwa auf einem Balkon, ist dies als nachteilig zu werten.

Aufgabe der Erfindung ist es vor diesem Hintergrund, ein Lebensmittelgargerät bereitzustellen, mit dem der Anwendungsbereich erweitert, der Bauraum verringert und die Effizienz gesteigert ist.

Gelöst wird diese Aufgabe durch ein gasbetriebenes Lebensmittelgargerät mit den Merkmalen des Anspruchs 1.

Vorteilhafte Ausgestaltungen ergeben sich aus den abhängigen Ansprüchen und der Beschreibung.

Die Erfindung setzt sich über das im Stand der Technik bekannte Vorurteil hinweg, dass eine Anordnung in einem gemeinsamen Brennraum unterschiedlich ausgebildeter Brenner, die sich in ihrem Aufbau und damit bzgl. ihrer flächenbezogenen Wärmeabgabe unterscheiden, nicht zu den gewünschten Wärmeverteilungsergebnissen führen würde. Als problematisch wurde stets die gleichmäßige Wärmeverteilung auf der Lebensmittelaufnahme, insbesondere, wenn als Grillplatte oder Grillrost ausgebildet, angesehen; diese ist notwendig, um zu garendes Lebensmittel gleichmäßig zu erwärmen.

Die Erfindung zielt darauf ab, dass der Stabbrenner oder der Kochstellenbrenner den jeweils anderen Brenner bei einem gleichzeitigen Betrieb der beiden Brenner beeinflussen, und zwar bzgl. seiner Wärmeabgabe. Diese ist durch die betriebsbedingte Beeinflussung des anderen Brenners verbessert. Eine Beeinflussung erfolgt durch die selbst von dem jeweiligen Brenner abgegebene Wärme. Eine solche Beeinflussung kann etwa durch den Aufbau eines Konvektionsstromes erfolgen, was eine Luftzufuhrunterstützung oder auch eine Luftabfuhrunterstützung mit sich bringt. So kann etwa der Stabbrenner mit seiner zu dem Kochstellenbrenner gerichteten Wärmeabgabe eine Wärmewand bilden, die verhindert, dass die durch den Kochstellenbrenner abgegebene Wärme in den Brennraum des Stabbrenners abfließt. Die Wärme des Kochstellenbrenners wird so auf den Bereich des Kochstellenbrenners fokussiert.

Auch kann eine Beeinflussung mittels Strahlungswärme erfolgen. So kann vorgesehen sein, dass zumindest ein Element - etwa ein oder mehrere Bleche - in dem Brennraum, ggf. auch zwischen den Brennern angeordnet sind, welche zumindest zu einem Teil durch einen der beiden Brenner erwärmt werden und als Wärmestrahler die Wärmeabgabe des anderen Brenners unterstützt. Es hat sich gezeigt, dass durch die gegenseitige Wärmebeeinflussung durch Wärme insgesamt eine selbstregulierend gleichmäßige Erwärmung der über den Brennern angeordneten Lebensmittelaufnahme erfolgt. Zurückgeführt wird dies unter anderem auf durch den anderen Brenner unterstützte Konvektion: Ein zwischen den beiden Brennern senkrecht angeordnetes Blech wird zusätzlich erwärmt, woraufhin zwischen Blech und Brenner ein Konvektionsstrom unterstützt wird, etwa in Form des Kamineffekts. Hierdurch wird die Frischluftzufuhr unterstützt und eine höhere Effizienz im Betrieb ist möglich. Zudem kann eine Fokussierung der Wärmabgabe erzielt werden.

In vielen Fällen wird es sich so verhalten, dass sowohl der Kochstellenbrenner den Stabbrenner als auch der Stabbrenner den Kochstellenbrenner beeinflusst, sodass eine gegenseitige Beeinflussung gegeben ist.

Typischerweise sind Stabbrenner und Kochstellenbrenner bzgl. der darüber angeordneten Lebensmittelaufnahme in einer Nebeneinanderstellung angeordnet. Ein erster Bereich der Lebensmittelaufnahme wird primär durch den Stabbrenner und ein zweiter Bereich primär durch den Kochstellenbrenner erwärmt. In vielen Fällen ist vorgesehen, dass die Lebensmittelaufnahme sich über beide Brenner erstrecken kann.

Es kann vorgesehen sein, dass der Stabbrenner in seiner Längserstreckung wesentlich länger ist, als der Kochstellenbrenner in seinem Durchmesser. Der Unterschied kann etwa das Zwei- bis Vierfache betragen. Trotzdem kann bei einer Nebeneinanderanordnung eines solchen Stabbrenners und eines Kochstellenbrenners, wobei die Längserstreckung des Stabbrenners in Tiefenrichtung des Brennraumes vorgesehen ist, von einer ausreichend gleichmäßigen Erwärmung einer darüber angeordneten Lebensmittelaufnahme ausgegangen werden.

Bevorzugt ist vorgesehen, dass in dem Brennraum zwischen dem Stabbrenner und dem Kochstellenbrenner ein Trennblech vorgesehen ist. Das Trennblech dient als Wärmestrahler zur Beeinflussung der Wärmeabgabe des jeweils anderen Brenners. Dieses kann ausgelegt sein, dass eine direkte Beeinflussung durch die Gasströmung unterbunden ist. Durch das erwärmte Trennblech wird eine an dem jeweiligen Brenner vorbeiströmende und durch ihn selbst initiierte Luftzufuhrkonvektion nach Art eines Kamins verstärkt, wobei insbesondere die Sauerstoffzufuhr unterstützt wird. So kann auch vorgesehen sein, dass das Trennblech lediglich im oberen Bereich des Brenners angeordnet ist und die beiden Brenner bzgl. einer unterseitigen Luftzufuhr über einen gemeinsamen Raum verfügen.

Weiter kann vorgesehen sein, dass zwischen Lebensmittelaufnahme und Stabbrenner eine Flammenabdeckung vorgesehen ist. Eine solche Flammenabdeckung kann die Funktion des Schutzes vor heruntertropfendem Fett oder anderen Lebensmittelflüssigkeiten auf den Brenner erfüllen, etwa, wenn die Lebensmittelaufnahme oberhalb des Stabbrenners als Grillrost ausgeführt ist.

Bevorzugt ist vorgesehen, dass die Flammenabdeckung sich zumindest bis in die Nähe des zuvor beschriebenen Trennbleches zwischen den beiden Brennern erstreckt, sodass die durch den Stabbrenner abgegebene Wärme zumindest teilweise auf das Trennblech gerichtet ist.. Durch die Fokussierung der durch den Stabbrenner abgegebenen Wärme auf das Trennblech wird der durch das Trennblech erzielte Effekt weiter verstärkt.

Bezüglich des Brennraumes kann vorgesehen sein, dass dieser zumindest über eine unterseitige Luftzufuhr verfügt. Bevorzugt ist vorgesehen, dass diese unterseitige Luftzufuhr an der unteren Seite des Brennraumes, bevorzugt im Bereich des tiefsten Punkt des Brennraumes vorgesehen ist. Durch diese Anordnung wird die zugeführte Luft weit durch den Brennraum geführt, sodass sich die zugeführte Luft turbulenzarm in den Brennraum verteilen kann und entsprechend beiden Brennern zur Verfügung steht. Dies ist insbesondere der Fall, wenn die Luftzufuhr sich auf eine kleine Fläche im Vergleich zu dem Brennraum begrenzt ist (etwa ein bis zwei Größenordnungen kleiner). Für eine laminare Strömung kann vorgesehen sein, den Brennraum sich aufweitend trichterförmig auszubilden. Zusätzlich kann vorgesehen sein, dass die Luftzufuhr auch als Fett- und Flüssigkeitsablauf aus dem Brennraum dienen kann.

Bevorzugt ist vorgesehen, dass sich das verfügbare Volumen des Brennraumes unterhalb des Stabbrenners von dem verfügbaren Volumen des Brennraumes unterhalb des Kochstellenbrenners unterscheidet. Das verfügbare Volumen unterhalb des jeweiligen Brenners hat Einfluss auf die durch den Brenner entstehende Konvektion. Es hat sich gezeigt, dass das Vorsehen eines Unterschiedes einer Vergleichmäßigung der abgegebenen Wärme, respektive der Erwärmung der darüber angeordneten Lebensmittelaufnahme zur Folge hat. Bevorzugt ist vorgesehen, dass das verfügbare Volumen des Brennraumes unterhalb des Stabbrenners größer ist als das verfügbare Volumen des Brennraumes unterhalb des Kochstellenbrenners.

So kann auch vorgesehen sein, dass der Abstand der Gasauslässe des Kochstellenbrenners zu der den Brennraum oberseitig abschließenden Lebensmittelaufnahme sich von dem Abstand der Gasauslässe des Stabbrenners zu der Lebensmittelaufnahme unterscheidet. Typischerweise ist der Abstand der Gasauslässe des Stabbrenners zu der Lebensmittelaufnahme größer als der Abstand der Gasauslässe des Kochstellenbrenners zu der Lebensmittelaufnahme.

Auch die Ausbildung der Lebensmittelaufnahme kann zur Beeinflussung der Erwärmung der Lebensmittelaufnahme und damit indirekt zur Beeinflussung der Wärmeabgabe des Brenners genutzt werden: So kann etwa vorgesehen sein, dass die Lebensmittelaufnahme oberhalb des Kochstellenbrenners nach Art einer Grillplatte derart geschlossen ist, dass das Herabtropfen von Flüssigkeiten auf den Kochstellenbrenner verhindert ist. Gleichzeitig wird durch das Schließen der Lebensmittelaufnahme ein Wärmestaudruck oberhalb des Kochstellenbrenners gebildet, sodass die Wärme unter der Lebensmittelaufnahme gehalten wird. Die zur Verfügung stehende Wärme weicht seitlich aus und beeinflusst auf diese Weise die Verteilung der Wärme in der Lebensmittelaufnahme. Hierdurch kann eine Beeinflussung der Wärmeabgabe des Stabbrenners und der ihm zugeordneten Lebensmittelaufnahme erfolgen.

Bevorzugt ist vorgesehen, dass der Stabbrenner eine Flammenabdeckung aufweist und der Kochstellenbrenner eine von der Lebensmittelaufnahme separate Flammenabdeckung nicht aufweist. Stattdessen ist die Lebensmittelaufnahme im Bereich oberhalb des Kochstellenbrenners geschlossen.

Es ist typischerweise vorgesehen, dass der Brennraum mit der darüber angeordneten Lebensmittelgaraufnahme durch eine gemeinsame Haube verschlossen werden kann. So kann in dem im Wesentlichen geschlossenen Raum, bereitgestellt Brennraum und Haube, Lebensmittel besonders effizient gegart werden. Der Haubenraum oberhalb der Lebensmittelaufnahme ist bevorzugt ungetrennt, um bei herabgelassener Haube einen einzigen Garraum bereitzustellen, äußerlich begrenzt durch die Lebensmittelaufnahme und die Haube. Für eine einfache Handhabung ist die Haube etwa an eine Seite des Lebensmittelgargerätes angelenkt, sodass durch eine Schwenkbewegung die Lebensmittelaufnahme von oben durch die Haube abgedeckt wird.

Typischerweise erstreckt sich der Stabbrenner in dem Brennraum dergestalt, dass seine Hauptgasauslässe entlang seiner Längserstreckung zumindest teilweise zu dem Kochstellenbrenner weisen. Auch der Kochstellenbrenner weist typischerweise einen oder mehrere Gasauslässe auf, die in Richtung zu dem Stabbrenner weisen.

Es hat sich erstaunlicherweise gezeigt, dass trotz der unterschiedlichen Geometrie von Stabbrenner und Kochstellenbrenner bezüglich der Flammabgabe eine Erwärmung der Lebensmittelaufnahme relativ gleichmäßig erfolgt, selbst wenn die beiden Brenner in etwa die gleiche Brennleistung aufweisen, etwa 2-3 kW.

Zur Erweiterung des Lebensmittelgargerätes kann vorgesehen sein, dass neben dem Stabbrenner ein weiterer Stabbrenner angeordnet ist. Auch der weitere Stabbrenner kann die gleiche Leistung aufweisen, wie der erste Stabbrenner und der Kochstellenbrenner. Durch den weiteren Stabbrenner kann die erwärmte Fläche der Lebensmittelaufnahme insbesondere zum Grillen vergrößert werden.

Die Fläche der Lebensmittelaufnahme, die durch die zwei Stabbrenner erwärmt wird, kann durchaus in etwa der Fläche entsprechen, die durch einen Kochstellenbrenner erwärmt wird. Das Brennerverhältnis bzgl. der Fläche der Lebensmittelaufnahme entspricht dann etwa dem Verhältnis 2:1 (zwei Stabbrenner: ein Kochstellenbrenner).

Durch das Bereitstellen eines Kochstellenbrenners auf einem Lebensmittelgargerät kann der Kochstellenbrenner auch dazu genutzt werden, Kochgeschirre, etwa ein Topf, eine Pfanne oder ein Wok, zu erwärmen. Hierfür kann bevorzugt ein über dem Kochstellenbrenner im Grillbetrieb angeordnetes Grillrost oder eine Grillplatte als Lebensmittelaufnahme abgenommen werden. Die Lebensmittelaufnahme - im Grillbetrieb als Grillrost oder Grillplatte ausgebildet - wird dann durch eine andere passende Lebensmittelaufnahme, etwa eine Kochgeschirraufnahme, ersetzt.

So wird durch das vorgeschlagene Konzept insgesamt weniger Material benötigt als im Stand der Technik, wobei zusätzlich weniger Bauraum benötigt wird.

Um ein Lebensmittelgargerät bereitzustellen, mit dem kombiniert gegrillt und gekocht werden kann, kann vorgesehen sein, dass die Lebensmittelaufnahme oberhalb von dem Stabbrenner und die Lebensmittelaufnahme oberhalb des Kochstellenbrenners, die beide für einen Grillbetrieb vorgesehen und als Grillplatte oder Grillrost ausgestaltet sind, getrennt voneinander entnehmbar sind. So kann der Kochstellenbrenner freigelegt und eine andere Lebensmittelaufnahme, etwa eine Kochgeschirraufnahme, aufgesetzt werden. Auf diese Weise können gleichzeitig Lebensmittel auf dem Grillrost oder der Grillplatte oberhalb des Stabbrenners gegrillt werden, während gleichzeitig in einem Kochgefäß auf dem Kochstellenbrenner weitere Lebensmittel, etwa eine dazugehörige Sauce, erwärmbar sind.

Die Erfindung betrifft ferner ein Lebensmittelgargerät mit einer Kochstellenwärmequelle wobei zum Abstützen eines Kochgeschirres oberhalb der Kochstellenwärmequelle zumindest zwei voneinander unabhängige durch jeweils zwei Schenkel und einen die Schenkel verbindenden Steg gebildete Bügel vorgesehen sind, wobei die freien Enden der Schenkel an dem Lebensmittelgargerät an oder in einem korrespondierenden Aufnahmenpaar lösbar abgestützt sind und mittels der Stege das Kochgeschirr im Betrieb abgestützt ist, und wobei zumindest ein Steg zumindest abschnittsweise in der Abstützebene zu dem Aufnahmenpaar, in dem der Bügel abgestützt ist, versetzt ist und/oder zum indest ein weiteres Aufnahmenpaar zur Verfügung gestellt ist, sodass ein solcher Bügel zumindest zwei unterschiedlichen Abstützkonfigurationen an einem Aufnahmepaar gehalten ist. Bevorzugt ist vorgesehen, diese Merkmale und die Merkmale aus der weiteren Beschreibung mit dem vorstehend beschriebenen Lebensmittelgargerät zu kombinieren.

Zum Abstützen eines Kochgeschirres, etwa eines Topfes, einer Pfanne oder eines Woks, sind bei einem solchen Lebensmittelgargerät zwei voneinander unabhängige Bügel vorgesehen, welche typischerweise aus einem hitzebeständigen Draht hergestellt sind. Diese umfassen zwei Schenkel mit freien Enden sowie einen die Schenkel verbindenden Steg. Mit den freien Enden der Schenkel sind die Bügel jeweils an dem Lebensmittelgargerät so abgestützt, dass die Stege in einer Abstützebene liegen. Mit den Stegen ist ein Kochgeschirr dergestalt abstützbar, dass es oberhalb der Kochstellenwärmequelle gehalten ist.

Durch das Bereitstellen von zwei voneinander unabhängigen Bügeln zum Ausbilden einer Abstützung besteht die Möglichkeit, unterschiedliche, an das jeweils abzustützende Kochgeschirr angepasste Abstützkonfigurationen bereitzustellen. Insbesondere kann vorgesehen sein, die Abstützfläche, die durch die Fläche zwischen den beiden Stegen aufgespannt ist, in ihrer Größe und/oder ihrer Umfangskontur entsprechend der benötigten Form und/oder Durchmesser zu variieren. So können die Stege etwa zumindest abschnittsweise unterschiedlich weit voneinander beabstandet angeordnet sein.

Eine Möglichkeit der Bereitstellung von unterschiedlichen Abstützkonfigurationen besteht darin, dass zumindest der Steg eines Bügels in der Abstützebene gegenüber dem Aufnahmepaar, an dem der Bügel an dem Lebensmittelgargerät abgestützt ist, zumindest abschnittsweise versetzt ist. Dies bedeutet, dass der Bügel so geformt ist, dass der Steg zumindest abschnittsweise nicht lotrecht bezüglich der Abstützebene oberhalb der Aufnahmen ist, sondern bezüglich dieser Lotrechte in Richtung des anderen Bügels versetzt ist.

Durch ein Wenden des Bügels, so dass die Zuordnung "freies Ende - Aufnahme" vertauscht wird, ändert sich der Abstand der Stege der beiden Bügel zueinander.

Bevorzugt ist vorgesehen, dass die vorstehenden Ausführungen für beide Bügel gelten, so dass beide Bügel durch ein Wenden unterschiedliche Abstützkonfigurationen zulassen.

So kann auch vorgesehen sein, dass die Stege in der Abstützebene gebogen, etwa mit einer konstanten Krümmung gebogen sind. In einer ersten Abstützkonfiguration weisen die beiden durch die Stege gebildeten Bögen zueinander, in einer anderen Abstützkonfiguration voneinander weg, sodass sich in der letztgenannten Abstützkonfiguration etwa eine oval- oder kreisförmige Abstützfläche ergibt. In dieser Abstützkonfiguration kann auch eine nach unten gerundete Wokpfanne eingesetzt und sicher abgestützt werden, während durch die erstgenannte Abstützkonfiguration ein herkömmlicher Topf oder eine Pfanne mit einem ebenen Boden aber auch einem kleinen Durchmesser abstützbar ist.

Eine weitere Möglichkeit unterschiedliche Abstützkonfigurationen bereitzustellen, die alternativ als auch ergänzend zu der vorstehend genannten vorgesehen sein kann, ist ein oder mehrere weitere Aufnahmepaare zum Abstützen der freien Enden der Schenkel bereitzustellen. Die Bügel sind von einem ersten Aufnahmepaar lösbar und an zumindest einem weiteren Aufnahmepaar wieder anbringbar. Hierfür ist der Abstand eines einem Bügel zugeordneten Aufnahmepaares entsprechend der lichten Weite der freien Enden dieses Bügels. Häufig werden beide Bügel identisch ausgebildet sein.

Auf diese Weise kann der Abstand zwischen den beiden Stegen durch eine entsprechende Anordnung der Aufnahmepaare variiert werden. Auch können unterschiedlich ausgeformte Abstützflächen, bzw. -muster gebildet werden.

So kann auch vorgesehen sein, dass an einem ersten Aufnahmepaar der Steg eines Bügels in einer ersten Höhe angeordnet ist und an einem weiteren zur Verfügung gestellten Aufnahmepaar in einer zweiten Höhe. Typischerweise gilt dies gleichermaßen für beide Bügel, damit immer eine waagerechte Abstützfläche bereitgestellt ist.

Die Erfindung wird anhand der beiliegenden Figuren näher erläutert. Es zeigen:
- **Fig. 1:**: ein gasbetriebenes Lebensmittelgargerät in einer ersten Konfiguration,
- **Fig. 2:**: Lebensmittelgargerät der Figur 1 in einer zweiten Konfiguration,
- **Fig. 3:**: eine Frontansicht des Lebensmittelgargerätes nach Figur 1, bei der die Frontblende ausgeblendet ist.
- **Fig. 4:**: eine Schrägansicht von oben in den Brennraum des Lebensmittelgargerätes,
- **Fig. 5:**: eine perspektivische Einsicht in ein modifiziertes Lebensmittelgargerät, bei dem einige Teile zur Veranschaulichung ausgeblendet sind,
- **Fig. 6:**: ein Teil eines Lebensmittelgargerätes mit einer Kochstellenwärmequelle und zwei ein Kochgeschirr abstützenden Bügeln,
- **Fig. 7:**: den Teil des Lebensmittelgargerätes aus Figur 6 in einer Frontansicht, wobei die Bügel in einer ersten Abstützkonfiguration angeordnet sind und
- **Fig. 8:**: den Teil des Lebensmittelgargerätes aus Figuren 6 und 7 in einer Draufsicht, in einer sich von Figur 7 unterscheidenden Abstützkonfiguration der Bügel.

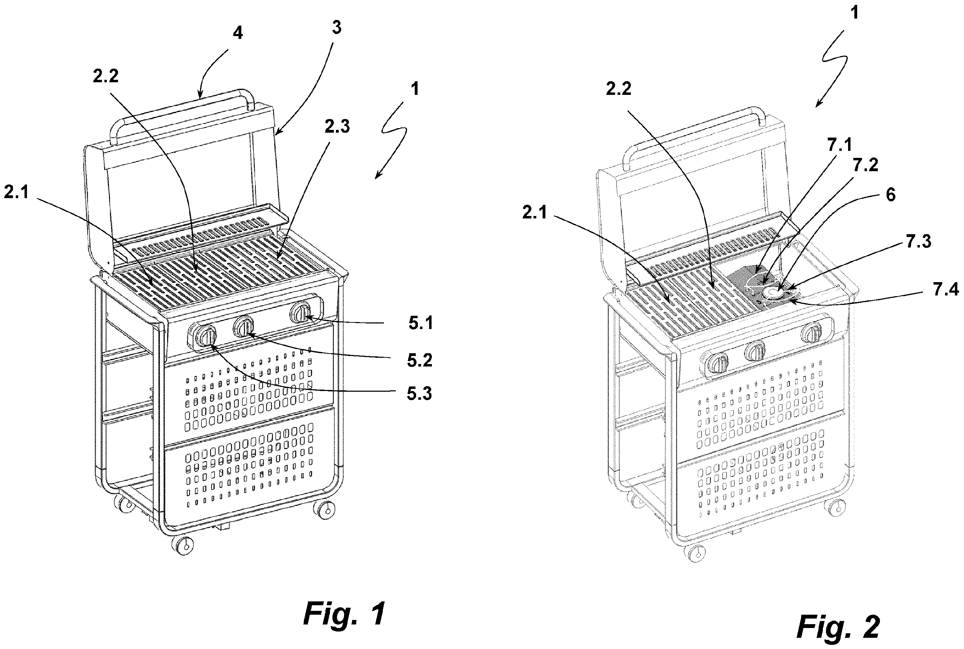

Figur 1 zeigt ein Lebensmittelgargerät 1. Das Lebensmittelgargerät 1 ist als gasbetriebenes Lebensmittelgargerät ausgebildet. Das Lebensmittelgargerät 1 umfasst eine aus getrennten Grillrostteilen 2.1, 2.2, 2.3 gebildete Lebensmittelaufnahme (ganzheitlich mit Bezugszeichen 2 angesprochen), auf der Lebensmittel zum Zwecke des Garens gelegt werden. Unterhalb der Lebensmittelaufnahme 2 sind in Figur 1 nicht erkennbare Gasbrenner angeordnet, mit deren erzeugter Wärme die Lebensmittel auf der Lebensmittelaufnahme 2 gegart werden. Zur Erhöhung der auf die Lebensmittel einwirkenden Temperatur ist ein Deckel 3 bereitgestellt, der händisch mittels des Griffs 4 auf und zugeklappt werden kann, sodass im geschlossenen Zustand des Deckels 3 ein mehr oder minder geschlossener Garraum zur Verfügung gestellt ist.

Frontseitig sind drei Bedienelemente 5.1, 5.2, 5.3 angeordnet. Mit diesen kann die Gaszufuhr zu den einzelnen, weiter unten beschriebenen drei Gasbrennern individuell beeinflusst werden.

Figur 2 zeigt das vorstehend beschriebene Lebensm ittelgargerät 1, bei dem ein Grillrostteil 2.3 entnommen ist; die beiden übrigen Grillrostteile 2.1, 2.2 sind weiterhin Teil der Lebensmittelaufnahme 2. Das abgenommene Grillrost 2.3 gibt den darunter liegenden Kochstellenbrenner 6 frei. Im Bereich des Kochstellenbrenners 6 sind vier Bügel 7.1, 7.2, 7.3, 7.4 (ganzheitlich mit Bezugszeichen 7 angesprochen) angeordnet, auf denen, bzw. auf zumindest einigen von denen ein Kochgeschirr abstellbar ist und das Kochgeschirr durch den Kochstellenbrenner 6 im Betrieb erwärmt wird. Die Bügel 7 sind somit auch Teil der Lebensmittelaufnahme 2, wenn das hier in der ersten Konfiguration gezeigte Grillrostteil 2.3 nicht montiert ist.

Durch den Vergleich der Figuren 1 und 2 wird deutlich, dass mit ein und demselben Lebensmittelgargerät 1 sowohl eine große Grillfläche, gebildet durch die drei Grillroste 2.1, 2.2, 2.3, zur Verfügung steht (siehe Figur 1), als auch in einer anderen Konfiguration ein Kochgeschirr neben einer dann kleineren, aber hinreichend großen Grillfläche, umfassend die Grillroste 2.1, 2.2, auf einem Kochstellenbrenner 6 erwärmt bzw. erhitzt werden kann (siehe Figur 2). Bei minimal benötigtem Abstellraum für das Lebensmittelgargerät 1 ist so die Nutzungsvielfalt erhöht.

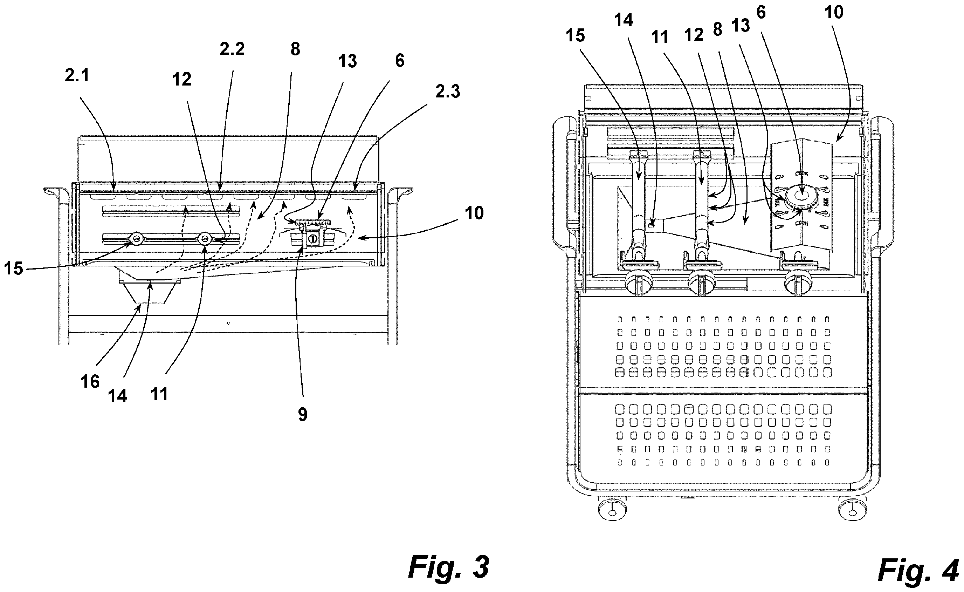

Möglich wird dies durch die Anordnung von zwei verschiedenen Brennertypen in einem gemeinsamen Brennraum 8: Figur 3 zeigt eine Einsicht in den Brennraum 8 aus einer Frontansicht. Der Brennraum 8 ist oberseitig durch die Lebensmittelaufnahme 2 in Form der Grillrostteile 2.1, 2.2, 2.3, begrenzt. Zu erkennen ist weiter der Kochstellenbrenner 6. Dieser ist abgestützt auf einem Querstreb 9. Der Querstreb 9 erstreckt sich in Tiefenrichtung des Brennraumes 8 und ist an den den Brennraum 8 begrenzenden Vorder- und Rückwänden (Rückwand 10 in den Figuren erkennbar) abgestützt.

Des Weiteren ist in dem Brennraum 8 neben dem Kochstellenbrenner 6 ein Stabbrenner 11 angeordnet. Auch dieser erstreckt sich in Tiefenrichtung des Brennraumes 8 und ist an den den Brennraum 8 begrenzenden Vorder- und Rückwänden (Rückwand 10) abgestützt. Die Gasauslässe 12 (einige beispielhaft gekennzeichnet) des Stabbrenners 11 weisen radial nach au-ßen und zwar in dieser Ausgestaltung zu dem Kochstellenbrenner 6. Auch einige der Gasauslässe 13 (einige beispielhaft gekennzeichnet) des Kochstellenbrenners 6 weisen zu dem Stabbrenner 11, da die Gasauslässe 13 des Kochstellenbrenners 6 ringsum angeordnet sind.

Von Besonderheit ist, dass sich die beiden Brenner - der Kochstellenbrenner 6 und der Stabbrenner 11 - durch ihre jeweilige Wärmeabgabe beeinflussen und zwar bzgl. der abgegebenen Wärme. Verdeutlicht wird dies durch gestrichelt eingezeichnete Konvektionsströme (in der Figur schematisch eingezeichnet). Deutlich wird die gegenseitige Beeinflussung auch mit Blick auf Figur 4. Der Stabbrenner 11 unterscheidet sich von dem Kochstellenbrenner 6 insofern, als dass die Gasauslässe 12 des Stabbrenners 11 über die gesamte Tiefe des Brennraumes 8 angeordnet sind, während die Gasauslässe 13 des Kochstellenbrenners 6 nur in einem sehr begrenzten Bereich der Tiefe des Brennraumes 8 gegeben sind. Somit stünde in einem ersten Schritt zu vermuten, dass die Wärmeverteilung oberhalb des Kochstellenbrenners 6 bei der Konfiguration als Grill (Figur 1) bzgl. der gesamten Grillfläche - der Lebensmittelaufnahme 2 - als nicht gleichmäßig genug zu werten sei. Tatsächlich verhält es sich jedoch so, dass sich durch die Beeinflussung der beiden Brenner 6, 11 die zur Verfügung stehende Wärme an der Lebensmittelaufnahme 2 vergleichmäßigt. Zurückgeführt wird dies auf ein Zusammenspiel zwischen Konvektion und Sauerstoffzufuhr: In den Bereichen der Vorder- und Rückwand 10, mithin in den Bereichen, in denen der Kochstellenbrenner 6 nicht angeordnet ist, wird weniger Sauerstoff durch den Kochstellenbrenner 6 verbraucht, sodass mehr Sauerstoff für den Stabbrenner 11 zur Verfügung steht. Zusammen mit den in Richtung der Vorder- und Rückwand 10 gerichteten Gasauslässen 13 des Kochstellenbrenners 6 wird auch der randseitige Bereich ausreichend erwärmt, während eine Überhitzung durch die relativ eng beieinander liegenden Gasauslässe 12, 13 des Stabbrenners 11 und des Kochstellenbrenners 6 im Mittenbereich durch einen gegenseitig hervorgerufenen Sauerstoffmangel nicht beobachten lässt.

Unterstützt wird dieser Effekt durch eine begrenzte Luftzufuhr im unteren Bereich des Brennraumes 8. Teil der Luftzufuhr ist auch der Auslass 14 im unteren Bereich des Brennraumes 8. Der Auslass 14 ist am tiefsten Punkt des Brennraumes 8 vorgesehen.

Zudem ist das Volumen des Brennraumes 8 in Hochrichtung unterschiedlich; der Brennraum 8 ist in seinem unteren Bereich nach Art eines Schrägtrichters ausgebildet: Unterhalb des Stabbrenners 11 ist ein größeres Brennraumvolumen vorhanden, als unter dem Kochstellenbrenner 6. Eine solche Anordnung unterstützt die zuvor beschriebenen Konvektionsströme insbesondere bzgl. der Luftzufuhr.

In dem Brennraum 8 ist ein weiterer Stabbrenner 15 angeordnet. Durch den weiteren Stabbrenner 15 wird die mögliche Grillfläche vergrößert.

Unterhalb des Auslasses 14 ist ein Flüssigkeitsauffangbehälter 16 angeordnet. In diesem werden Flüssigkeiten, die durch den Auslass 14 nach außen treten, aufgefangen.

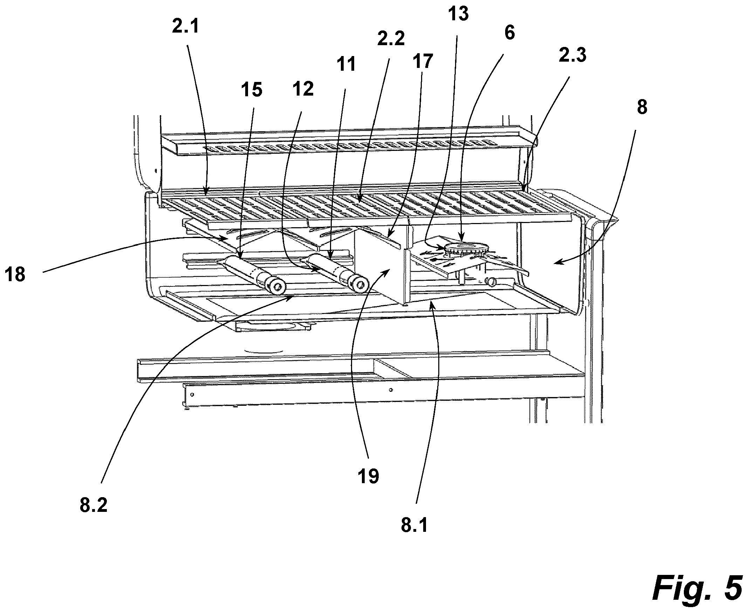

Figur 5 zeigt eine Einsicht in den Brennraum 8 eines modifizierten Lebensmittelgargerätes in einer dreidimensionalen Ansicht. Vorgesehen sind oberhalb der beiden Stabbrenner 11, 15 Flammenabdeckungen 17, 18, die als dachförmige Bleche ausgebildet sind. Die Flammenabdeckungen 17, 18 weisen hutzenförmige, schräg nach unten weisende Auslässe auf, durch die erwärmte Luft hindurchtreten kann. Von oben durch das Grillrost 2.1, 2.2 herabtropfende Flüssigkeit wird von diesen seitlich abgeleitet, sodass die Stabbrenner 11, 15 nicht mit diesen Flüssigkeiten in Berührung kommen.

Um den Kochstellenbrenner 6 vor herabtropfender Flüssigkeit auf dem ebenfalls hier eingesetzten, den Brennraum 8 oberhalb des Kochstellenbrenners 6 begrenzenden dritten Grillrostteils 2.3 zu schützen, ist der Grillrost 2.3 oberhalb des Kochstellenbrenners 6 geschlossen und somit abschnittsweise als Grillplatte ausgebildet.

Des Weiteren ist in dieser Ausgestaltung in dem Brennraum 8 zwischen dem Stabbrenner 11 und dem Kochstellenbrenner 6 ein Trennblech 19 als Modifikation angeordnet. Das Trennblech 19 beeinflusst die Konvektion in dem Brennraum 8, wird jedoch gleichzeitig durch den Stabbrenner 11 als auch durch den Kochbrenner 6 erwärmt. Das erwärmte Trennblech 19 strahlt auf den jeweils anderen Brenner ab und beeinflusst die Konvektion um diesen Brenner herum, was zu einem Kamineffekt führt. Auf diese Weise kann die Wärmeverteilung auf der als Grillrost ausgebildeten Lebensmittelaufnahme 2 weiter verbessert und vergleichmäßigt werden. Gleichzeitig ist zu erkennen, dass unterhalb der Gasauslässe 12, 13 der Brennraum 8 durch das Trennblech 19 nicht getrennt ist; vielmehr ist ein Luftaustausch zwischen den beiden Brennraumabschnitten 8.1, 8.2 ermöglicht.

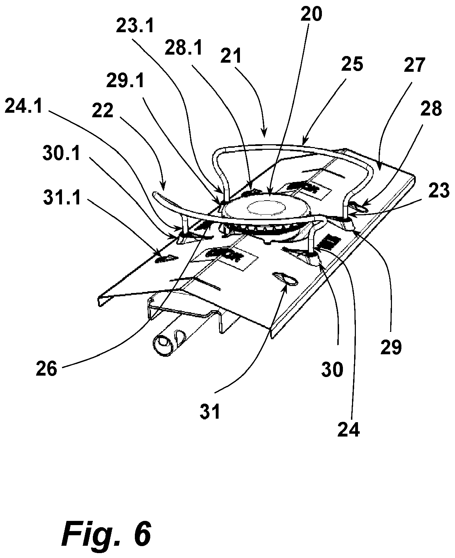

Die Figuren 6 bis 8 zeigen einen Teil eines hier nicht näher dargestellten Lebensmittelgargerätes mit einer Kochstellenwärmequelle 20, welche hier als gasbetriebene Kochstellenwärmequelle ausgebildet ist. Die Kochstellenwärmequelle 20 ist kreisrund geformt und weist an ihrem äußeren Umfang radial nach außen weisende Gasauslässe auf. In das Zentrum der Kochstellenwärmequelle 20 wird brennbares Gas eingeleitet, welches aus den Gasauslässen austritt und sich im Betrieb entzündet. Oberhalb der Kochstellenwärmequelle 20 kann Kochgeschirr mit einem darin befindlichen Lebensmittel erwärmt werden, sodass das darin befindliche Lebensmittel gegart wird.

Zum Abstützen des Kochgeschirres verfügt das nicht näher dargestellte Lebensmittelgargerät über zwei Bügel 21 , 22. Die Bügel 21 , 22 werden jeweils gebildet durch zwei Schenkel 23, 23.1, 24, 24.1 sowie einen die jeweiligen Schenkel 23, 23.1; 24, 24.1 verbindenden Steg 25, 26.

Mit den freien Enden der Schenkel 23, 23.1, 24, 24.1 sind die Bügel 21, 22 an einem Schutzblech 27 abgestützt. Hierfür verfügt das Schutzblech 27 über Aufnahmen 28, 28.1, 29, 29.1, 30, 30.1, 31, 31.1, in die die freien Enden der Schenkel 23, 23.1, 24, 24.1 einsetzbar sind. Die Bügel 21, 22 sind von diesen Aufnahmen 28, 28.1, 29, 29.1, 30, 30.1, 31, 31.1 lösbar, sodass die Bügel 21, 22 in andere Aufnahmen eingesetzt werden können. Hierfür sind die jeweilig miteinander korrespondierenden für eine Abstützkonfiguration vorgesehenen Aufnahmen 28, 28.1; 29, 29.1; 30, 30.1; 31, 31.1 entsprechend der weiten Lichte der freien Enden der Schenkel 23, 23.1, 24, 24.1 beabstandet.

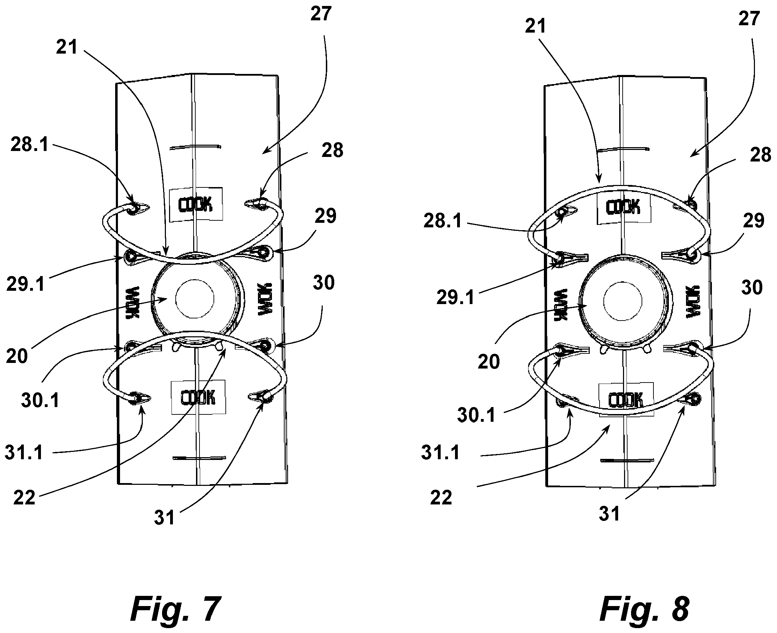

Zwei verschiedene Abstützkonfigurationen sind in den Figuren 7 und 8 dargestellt. Zum Bereitstellen verschiedener Abstützkonfigurationen sind die genannten verschiedenen Aufnahmen 28, 28.1; 29, 29.1; 30, 30.1; 31, 31.1 zur Verfügung gestellt. Des Weiteren ist vorgesehen, die Stege 25, 26 der Bügel 21, 22 zumindest abschnittsweise in der Abstützebene versetzt zu den jeweiligen Aufnahmen 28, 28.1, 31, 31.1 bzgl. Figur 7 und 29, 29.1 und 30, 30.1 bzgl. der Figur 8 anzuordnen. In diesem Ausführungsbeispiel sind die Stege 25, 26 gebogen. Durch diese Formgebung kann die zwischen den Stegen 25, 26 aufgespannte Abstützfläche in ihrer Form variiert werden: Während die Abstützfläche der in Figur 7 gezeigten Konfiguration der Form einer quergestellten Sanduhr ähnelt, ist diese bzgl. der Konfiguration, die in Figur 8 gezeigt ist, oval- bzw. kreisförmig. Durch die Variation der Abstützfläche bzgl. des minimalen und maximalen Abstandes der Stege 25, 26 zueinander können verschiedene Kochgeschirre sicher auf den Bügeln 21, 22 gehalten werden: Möglich sind hierbei nicht nur Kochgeschirre mit einem ebenen unteren Abschluss, sondern auch mit einem gewölbten, etwa ein gerundeter Wok, insbesondere in einer Abstützkonfiguration, wie sie in Figur 8 zu erkennen ist. Die durch die Stege 25, 26 bereitgestellte Abstützung ist dann gleichzeitig zumindest abschnittsweise eine Einfassung des Kochgeschirrs.

Eine Variation der Abstützfläche kann auch durch ein Einsetzen der Bügel 21, 22 in andere Aufnahmen 28, 28.1, 29, 29.1, 30, 30.1, 31, 31.1 erfolgen, wobei die Bügel 21, 22 nicht zwingend gewendet werden müssen, wenngleich dies möglich ist.

Des Weiteren ist vorgesehen, dass die äußeren Aufnahmen 28, 28.1, 31, 31.1 tiefer angeordnet sind als die näher an der Kochstellenwärmequelle 20 angeordneten Aufnahmen 29, 29.1, 30, 30.1. Somit kann die Abstützfläche auf unterschiedlichen Höhen angeordnet sein, sodass ein auf den Stegen 25, 26 abgestütztes Kochgeschirr in verschiedenen Abstützkonfigurationen unterschiedlich weit von der Kochstellenwärmequelle 20 beabstandet sein kann.

Der vorstehend beschriebene Teil eines Lebensmittelgargerätes umfassend eine Kochstellenwärmequelle 20 ist im Vorliegenden auch Teil des davor beschriebenen gasbetriebenen Lebensmittelgargerätes 1, wobei dessen Kochstellenbrenner 6 sowie die dazugehörige Peripherie entsprechend ausgebildet ist.

Die Erfindung ist anhand von Ausführungsbeispielen beschrieben worden. Ohne den Schutzbereich, beschrieben durch die Ansprüche, zu verlassen, ergeben sich für den Fachmann zahlreiche weitere Ausgestaltungen, den Erfindungsgedanken zu verwirklichen, ohne dass diese im Rahmen dieser Ausführungen näher erläutert werden müssten.

### Bezugszeichenliste

- 1: Lebensmittelgargerät
- 2: Lebensmittelaufnahme
- 2.1, 2.2, 2.3: Grillrost
- 3: Deckel
- 4: Griff
- 5.1, 5.2, 5.3: Bedienelement
- 6: Kochstellenbrenner
- 7, 7.1, 7.2, 7.3, 7.4: Bügel
- 8: Brennraum
- 9: Querstreb
- 10: Rückwand
- 11: Stabbrenner
- 12: Gasauslässe des Stabbrenners
- 13: Gasauslässe des Kochstellenbrenners
- 14: Auslass
- 15: weiterer Stabbrenner
- 16: Flüssigkeitsauffangbehälter
- 17, 18: Flammenabdeckung
- 19: Trennblech
- 20: Kochstellenwärmequelle
- 21,22: Bügel
- 23, 23.1, 24, 24.1: Schenkel
- 25, 26: Steg
- 27: Schutzblech
- 28, 28.1, 29, 29.1, 30, 30.1, 31, 31.1: Aufnahme

## Patentansprüche

1. Gasbetriebenes Lebensmittelgargerät (1) umfassend einen Brennraum (8), sowie eine den Brennraum (8) zumindest abschnittsweise nach oben abschließende, im Betrieb zu garende Lebensmittel aufnehmende Lebensmittelaufnahme (2, 2.1, 2.2, 2.3, 7, 7.1, 7.2, 7.3, 7.4), wobei in dem Brennraum (8) ein gasbetriebener Stabbrenner (11) neben einem gasbetriebenen Kochstellenbrenner (6) dergestalt zueinander angeordnet ist, dass bei einem gleichzeitigen Betrieb der beiden Brenner (11, 6) zumindest ein Brenner (11, 6) den anderen Brenner (11, 6) bezüglich seiner Wärmeabgabe durch die selbst von ihm abgegebene Wärme beeinflusst.

2. Gasbetriebenes Lebensmittelgargerät nach Anspruch 1, **dadurch gekennzeichnet, dass** in dem Brennraum (8) zwischen dem Stabbrenner (11) und dem Kochstellenbrenner (6) ein Trennblech (19) vorgesehen ist.

3. Gasbetriebenes Lebensmittelgargerät nach Anspruch 1 oder 2, **dadurch gekennzeichnet, dass** zwischen Lebensmittelaufnahme (2, 2.1, 2.2) und Stabbrenner (11) eine Flammenabdeckung (17) vorgesehen ist, welches sich zumindest bis in die Nähe des Trennbleches (19) erstreckt, sodass die durch den Stabbrenner (11) abgegebene Wärme zumindest teilweise auf das Trennblech (19) geleitet ist.

4. Gasbetriebenes Lebensmittelgargerät nach einem der Ansprüche 1 bis 3, **dadurch gekennzeichnet, dass** der Brennraum (8) an seinem tiefsten Punkt eine Luftzufuhr aufweist.

5. Gasbetriebenes Lebensmittelgargerät nach einem der Ansprüche 1 bis 4, **dadurch gekennzeichnet, dass** sich das verfügbare Volumen des Brennraumes (8) unterhalb des Stabbrenners (11) von dem verfügbaren Volumen des Brennraumes (8) unterhalb des Kochstellenbrenner (6) unterscheidet.

6. Gasbetriebenes Lebensmittelgargerät nach einem der Ansprüche 1 bis 5, **dadurch gekennzeichnet, dass** der Abstand der Gasauslässe (13) des Kochstellenbrenners (6) zu der Lebensmittelaufnahme (2, 2.1, 2.2, 2.3) sich von dem Abstand der Gasauslässe (12) des Stabbrenners (11) zu der Lebensmittelaufnahme (2, 2.1, 2.2, 2.3) unterscheidet.

7. Gasbetriebenes Lebensmittelgargerät nach einem der Ansprüche 1 bis 6, **dadurch gekennzeichnet, dass** der Stabbrenner (11) in etwa die gleiche Leistung aufweist wie der Kochstellenbrenner (6).

8. Gasbetriebenes Lebensmittelgargerät nach einem der Ansprüche 1 bis 7, **dadurch gekennzeichnet, dass** neben dem Stabbrenner (11) zumindest ein weiterer Stabbrenner (15) angeordnet ist.

9. Gasbetriebenes Lebensmittelgargerät nach Anspruch 8, **dadurch gekennzeichnet, dass** die Fläche der Lebensmittelaufnahme (2.1, 2.2), die durch die beiden Stabbrenner (11, 15) erwärmt ist, in etwa der Fläche der Lebensmittelaufnahme (2.3) entspricht, die durch den Kochstellenbrenner (6) erwärmt ist.

10. Gasbetriebenes Lebensmittelgargerät nach einem der Ansprüche 1 bis 9, **dadurch gekennzeichnet, dass** zum Abstützen eines Kochgeschirres oberhalb des Kochstellenbrenners zumindest zwei voneinander unabhängige durch jeweils zwei Schenkel und einen die Schenkel verbindenden Steg gebildete Bügel vorgesehen sind, wobei die freien Enden der Schenkel an dem Lebensmittelgargerät an oder in einem korrespondierenden Aufnahmenpaar lösbar abgestützt sind und mittels der Stege das Kochgeschirr im Betrieb abgestützt ist, und wobei zumindest ein Steg zumindest abschnittsweise in der Abstützebene zu dem Aufnahmepaar versetzt ist und/oder zumindest ein weiteres Aufnahmepaar zur Verfügung gestellt ist, sodass ein solcher Bügel in zumindest zwei unterschiedlichen Abstützkonfiguration an einem Aufnahmepaar gehalten ist.

11. Lebensmittelgargerät nach Anspruch 10, **dadurch gekennzeichnet, dass** der Steg (25, 26) des Bügels (21, 22) sich auf einer ersten Höhe befindet, wenn er an einem ersten Aufnahmenpaar (28, 28.1; 31, 31.1) abgestützt ist und in einer zweiten, von der ersten Höhe sich unterscheidenden Höhe befindet, wenn er an einem von dem ersten Aufnahmenpaar (28, 28.1; 31, 31.1) sich unterscheidenden zweiten Aufnahmenpaar (29, 29.1; 30, 30.1) abgestützt ist.

12. Lebensmittelgargerät nach einem der Ansprüche 10 bis 11, **dadurch gekennzeichnet, dass** der Steg (25, 26) zumindest eines Bügels (21, 22) in der Abstützebene gebogen ist.

13. Lebensmittelgargerät nach einem der Ansprüche 10 bis 12, **dadurch gekennzeichnet, dass** die Bügel (21, 22) aus einem hitzebeständigen Drahtmaterial hergestellt sind.
